# EUROPEAN PATENT APPLICATION

(11) **EP 2 657 514 A1**
(43) Date of publication of application: **30.10.2013**
(21) Application number: 13165018.6
(22) Date of filing: 23.04.2013
(51) Int. Cl.: F03D 3/06

(54) **Vertical-axis wind or hydraulic turbine structure**

(30) Priority: 23.04.2012 IT PD20120127
(71) Applicant: Wind Twentyone S.r.l., 35020 Albignasego (PD) (IT)
(72) Inventor: Benini, Ernesto, I-35038 Torreglia (PD) (IT); De Betta, Stefano, I-35131 Padova (IT); Raciti Castelli, Marco, I-31100 Treviso (IT)
(74) Representative: Gallo, Luca

(57) **Abstract**

The present finding refers to a vertical-axis wind or hydraulic turbine structure (10), comprising a shaft (11) with vertical axis from which support spokes (12, 13, 14) are radially extended for at least two blades (15, 16) being extended from the bottom upward along rectilinear or curved trajectories, with vertical axis or being extended along a helical trajectory or the like.

Each spoke (12, 13, 14) has an external portion (18), with aerodynamic profile, an internal portion (19) for fixing to said shaft, and an intermediate connector portion (20), whose external end profile (21), for joining to the external portion (18), corresponds with the aerodynamic profile (22) of the same external portion (18), the internal end profile (23) having non-aerodynamic geometry, the lateral surface (24) of said intermediate portion (20) being extended between the two end profiles (21, 23) in a continuous manner.

## Description

### Field of application

The present finding has a vertical-axis wind or hydraulic turbine structure as object, according to the preamble of the independent claim.

Vertical-axis turbines according to the present invention are adapted to be employed for transforming, in a *per se* conventional manner, the kinetic energy of the wind or water into mechanical energy and then into electrical energy with a high fluid-dynamic efficiency. Vertical-axis turbines, object of the present invention, are therefore inserted in the technological field of renewable energies, and more particularly in the industrial field of the production of wind and/or hydraulic generators.

### State of art

Presently, in Europe, 20% of electrical energy requirements is obtained from renewable resources, and more than a quarter of such 20% comes from energy produced by plants of wind type. Such percentages are destined to increase in the near future, according to the directives of the European Union Commission on Renewable Energy, up to a production of electrical energy coming from renewable sources of 34% of the total produced energy, with 14% coming from wind sources.

The wind turbines operating in the wind plants are mainly of horizontal axis type, with a three-blade rotor.

Nevertheless, in recent years there has been increasing interest in vertical-axis wind turbines, especially for small plants, with the objective of decentralizing the production of electrical energy from the large plants both towards the city center and towards small towns.

Vertical-axis turbines have several advantages with respect to horizontal-axis turbines, including independence of functioning with respect to the direction of origin of the wind, a lower acoustic emission, due to the small peripheral speeds of the blade sections, and also a more pleasant visual impact due to the substantially three-dimensional extension of their structure, as opposed to the typical two-dimension structure of the horizontal-axis generators.

Among the vertical-axis wind turbines, the type "with lift" is often used; the most well-known model thereof is constituted by the Darrieus turbine.

The Darrieus turbines generally comprise a vertical-axis shaft from which support spokes are radially extended for at least two blades extended upward along rectilinear or curved trajectories, also with vertical axis or tilted in tangential direction, i.e. extended along a helical line.

The spokes constitute a fundamental part of the architecture of the turbine rotor, since they constitute the structural element of connection between the blades and the rotation shaft, given that they are set to transmit to the rotation shaft itself the twisting moment developed by the aerodynamic forces.

Thus, it is essential that the spokes carry out their structural function, offering the least possible aerodynamic resistance and interfering with the flow on the blades as little as possible.

The geometries of the spokes of known type employed over the years are quite varied.

In the patent US5531567 on behalf of Anderson and Christian, straight spokes are described with substantially rectangular section, whose function is that of adjusting the position of the blades during the functioning of the turbine; the section proposed for such spokes therefore does not have any aerodynamic function.

In addition, such spokes are of complex installation, given that they are part of a leverage system for moving and repositioning the blades.

In the patent application US2009/0129928 on behalf of Sauer et al., a wind turbine is described having many radial spokes, each separately and independently fixed with respect to the others, perpendicular to the same rotation shaft.

Such assembly system for a turbine, even if widespread, has proven to be rather wasteful in terms of time, fixing components and specialized work force.

In the patent application US2010/0172759 on behalf of Sullivan, a type of turbine is described having foldable arms of the spokes, in a manner so as to protect the rotor even in the presence of strong wind; such spokes are illustrated as having an aerodynamic section profile, but their functionality is limited by the fact that they are joined with the rotation axis and with the corresponding blade by means of a series of articulation means, which inevitably negatively affect the aerodynamic characteristics thereof.

Known from the international patent application WO 2010/150084 and from the U.S. patent application US 2010/0232965 are structures of vertical-axis wind turbines comprising a vertical shaft that supports, by means of two groups of spokes, respectively three and five blades intended to be hit with a flow of air.

The spokes are obtained with elements that are separate from each other, fixed to the shaft by means of end portions having a thinned portion fixed with screws to counter-plates integral with the shaft.

Such configuration of spokes does not allow attaining high mechanical strength characteristics, i.e. it does not allow supporting the blades in an adequately rigid manner, due to the clearances that inevitably exist due to the use of the fixing screws and due to the absence of a direct mechanical connection that makes one blade integral with the contiguous blades.

A further drawback lies in the fact that the spokes of the aforesaid turbine structures of known type do not provide a profile that allows maintaining the air resistance at a low level, especially at the attachment with the shaft.

In addition, structurally, the aforesaid turbine structures of known type are complex and difficult to mount, requiring the use of qualified personnel for times that negatively affect the entire production process.

### Presentation of the invention

The task of the present finding is to obtain a vertical-axis wind or hydraulic turbine structure capable of overcoming the drawbacks of the turbines of known type.

In the scope of such task, the main object of the finding is to develop a turbine structure whose spokes are simple to mount and at the same time offer the lowest possible aerodynamic resistance.

Another object of the finding is to develop a turbine structure whose spokes ensure optimal rigidity to the entire rotor.

Not least object of the finding is to develop a vertical-axis wind or hydraulic turbine structure, that can be produced with known plants and technologies.

This task, as well as the above objects and others which will be clearer below, are attained by a vertical-axis wind or hydraulic turbine structure, comprising a vertical-axis shaft from which support spokes are radially extended for at least two blades being extended from the bottom upward along rectilinear or curved trajectories, with vertical axis or being extended along a helical trajectory or the like, which is **characterized in that** each spoke has an external portion, with aerodynamic profile, an internal portion for fixing to said shaft, and an intermediate connector portion whose external end profile, joining the external portion, corresponds with the aerodynamic profile of the same external profile, and the internal end profile having non-aerodynamic geometry, the surface of said intermediate profile being extended between the two end profiles in a continuous manner.

### Brief description of the drawings

Further characteristics and advantages of the finding will be clearer from the description of a preferred but not exclusive embodiment of the turbine structure according to the finding, illustrated as a non-limiting example in the set of enclosed drawings, in which:
- figure 1 illustrates a perspective view of a turbine structure according to the finding;
- figure 2 represents a perspective view of a plurality of spokes of a turbine structure according to the finding;
- figure 3 represents a plan view of a plurality of spokes;
- figure 4 represents a perspective view of an intermediate connector portion of a spoke of a turbine structure according to the finding;
- figure 5 represents a geometric scheme of a process for defining the internal end profile of said intermediate portion, with respect to the aerodynamic external end profile.

### Detailed description of a preferred embodiment

With reference to the abovementioned figures, a vertical-axis wind or hydraulic turbine structure according to the finding is indicated in its entirety with the number 10.

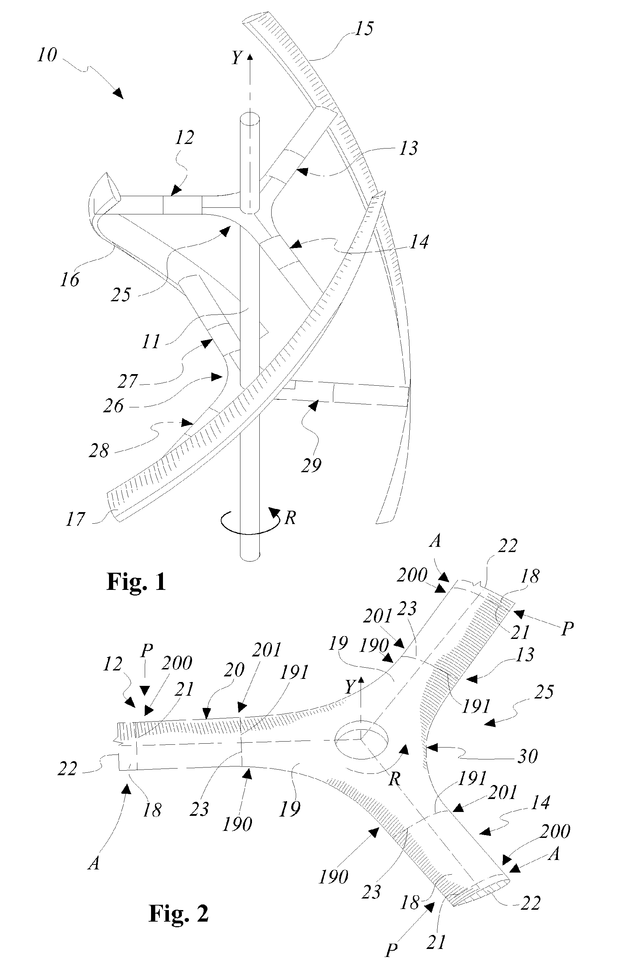

Such turbine structure 10 comprises a shaft 11 with vertical axis Y susceptible to rotating in a rotation direction indicated with R in the enclosed figures. The shaft 11 is vertically extended starting from an underlying generator, not illustrated for the sake of simplicity. The turbine structure 10 comprises at least two blades, and in particular for example three blades 15, 16, 17, in accordance with the embodiment of the enclosed figures, which are intended to be hit with a fluid (air in the preferred use case of the structure 10 for a wind turbine), and are extended from the bottom upward (see figure 1) along rectilinear or curved trajectories, with vertical extension axis or with extension axis along a helical trajectory or the like.

The blades 15, 16, 17 are responsible for the rotation of the shaft due to the aerodynamic reaction produced by the passage of the fluid.

Two or more support spokes 12, 13, 14, 27, 28, 29 are then provided, which as specified below can be organized in multiple superimposed groups. The number of spokes is equal to the number of the blades 15, 16, 17 and therefore, in accordance with the embodiment of the enclosed figures, is equal to three.

Such spokes 12, 13, 14, 27, 28, 29 are radially extended from the shaft 11 in a symmetric manner and angularly equidistant with respect to the rotation axis Y.

They mechanically connect the blades 15, 16, 17 to the shaft 11 in order to support the blades 15, 16, 17 with respect to the shaft and transfer the rotation motion induced by the blades 15, 16, 17 to the same shaft 11. The blades 15, 16, 17 are provided with a leading edge A susceptible to be the first hit by the fluid in the rotation direction R of the blades of the turbine, and a trailing edge P, at which the fluid is susceptible to be recombined after the separation due to the impact with the spoke 12, 13, 14, 27, 28, 29.

The expressions leading edge A and trailing edge P usually employed for the blades can also be used for the spokes with regard to the rotation direction of the turbine, due to the requirement that the same spokes have for minimizing the aerodynamic resistance. As is known, the trailing edge P usually has a more tapered form than the leading edge A.

The spokes 12, 13, 14, 27, 28, 29 are radially extended with a profile or with a section orthogonal to the extension thereof, which forms the idea underlying the present invention. The distinctive characteristic of the finding lies in the fact that each spoke 12, 13, 14, 27, 28, 29, e.g. spoke 12, has an external portion 18, with aerodynamic profile, an internal portion 19 for fixing to the shaft 11, and an intermediate connector portion 20, whose external end profile 21, for joining to the external portion 18, coincides with the aerodynamic profile 22 of the external portion 18, while the internal end profile 23 instead has non-aerodynamic geometry for the connection with the shaft 11.

More in detail, the external portion 18 is provided with an aerodynamic profile 22, in particular of NACA type and bears a blade 15, 16, 17 externally fixed by means of first fixing means *per se* known to the man skilled in the art (e.g. screws) and for this reason not described in detail or illustrated in the enclosed figures.

The internal portion 19 for fixing to the shaft 11 obtains, in a single body with the internal portion 19 of the other spokes 12, 13, 14, 27, 28, 29, a support body 30 having a central hole 31 for fixing to the shaft 11 by means of second fixing means, also in this case *per se* known to the man skilled in the art (e.g. screws) and for this reason not described in detail or illustrated in the enclosed figures.

The support body is extended as a ring around the shaft 11, conferring extreme rigidity to the structure 1, mechanically connecting the spokes 12, 13, 14, 27, 28, 29 together in a single body; at the same time, due to the manner of its connection with the external portions 18, i.e. due to the intermediate portions 20, the support body allows considerably reducing the aerodynamic resistance to the passage of the fluid.

The internal portion 19 is provided with a peripheral end 190, i.e. turned towards the blades 15, 16, 17 which has a connection profile 191 associated whose shape will be specified below.

In turn the intermediate portion 20 of the spokes 12, 13, 14, 27, 28, 29 acts as a connector between the external portion 18 and the internal portion 19.

Such intermediate portion 20 is radially extended between a first external end 200 thereof, having an external end profile 21 associated that is mechanically and seamlessly joined to the aerodynamic profile 22 of the external portion 18 and a first internal end 201 thereof, having an internal end profile 23 associated that is mechanically and seamlessly joined to the connection profile 191 of the internal portion 19.

The external end profile 21 associated with the first external end 200 of the intermediate portion 20 of each spoke 12, 13, 14, 27, 28, 29, has the same aerodynamic profile 22 of the external portion 18 in order to be continuously and seamlessly connected with the aerodynamic profile 22 of the external portion 18 itself.

In addition, the leading edge A of the intermediate portion 20 of each spoke 12, 13, 14, 27, 28, 29 has shape equivalent to that of the leading edge A of the aerodynamic profile 22 of the external portion 18, for the entire extension of the intermediate portion 20, i.e. from the external end profile 21 associated with the first external end 200, to the internal end profile 23 associated with the first internal end 201.

The internal end profile 23 associated with the first internal end 201 of the intermediate portion 20 of each spoke 12, 13, 14, 27, 28, 29 is provided with a leading edge A and with a trailing edge P, which have equivalent shape, such shape equivalent to the leading edge A of the aerodynamic profile 22.

In addition, the trailing edge P of the intermediate portion 20 of each spoke 12, 13, 14, 27, 28, 29 is continuously extended from the shape of the trailing edge P of the external end profile 21 associated with the first external end 200 thereof and equivalent to the shape of the trailing edge P of the aerodynamic profile 22, to the trailing edge P of the internal end profile 23 thereof associated with the first internal end 201 thereof and equivalent to the shape of the leading edge A of the aerodynamic profile 22.

The configuration of the shapes of the portions into which each spoke is ideally divided allows conferring high mechanical rigidity to the structure and at the same time maintaining the aerodynamic resistance exerted by the spokes on the fluid at an extremely low level.

In substance, an intermediate portion 20 is defined in the spokes 12, 13, 14, 27, 28, 29 which connects the leading edge A to the trailing edge P of two contiguous spokes, optimizing the mechanical resistance with an enlargement of the trailing edge P until it attains the same form as the leading edge A at the internal end profile 23 thereof.

Between the two end profiles 21 and 23 of the intermediate portion 20, a lateral surface 24 is defined which is continuously extended.

In the embodiment of the turbine structure 10 according to the finding, described herein as a non-limiting example of the finding itself, the spokes as mentioned are in groups of three; there is a first group of spokes 25, comprising the first upper spokes 12, 13 and 14, and a second group of spokes 26, comprising the second lower spokes 27, 28 and 29.

The spokes 12, 13 and 14 are symmetrically and angularly distributed with respect to the rotation axis.

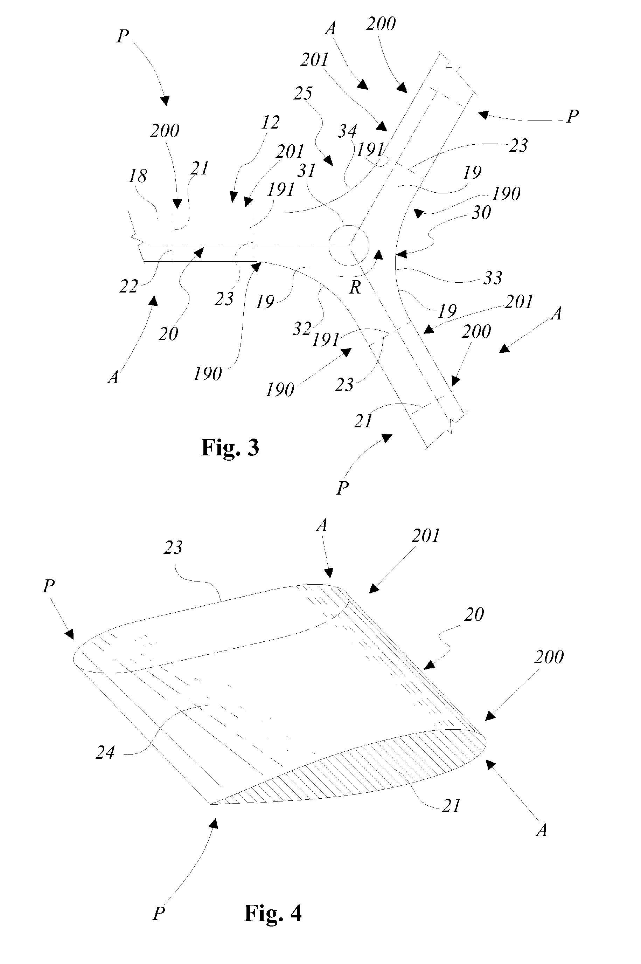

Each group of spokes, e.g. 25, as for the group of spokes 26, defines a central body 30 by means of joining the internal portions 19 thereof in a single body. Such central body 30, mentioned above and clearly visible in figures 2 and 3, has a central hole 31 for fixing to the shaft 11, from which the spokes 12, 13 and 14 are radially extended in a single body with the same central part 30, the spokes extended starting from their intermediate portion 20.

The central body 30, by means of the internal portions 19, connects the leading edges A and the trailing edges P of the internal end profiles 23 of the intermediate portions 20 by means of connecting arches 32, 33 and 34.

Advantageously, in accordance with a preferred embodiment of the present invention, such connecting arches 32, 33 and 34 have the shape of the profile of the leading edge A with constant extension and equivalent to the shape of the aerodynamic profile 22 of the leading edge A.

Such connecting arches 32, 33 and 34 are tangentially connected to the intermediate portion 20 at the internal end profile 23.

In the embodiment taken under consideration in this description, the aerodynamic profile 22 of the aerodynamic external portion 18 of the spokes 12, 13, 14, 27, 28, 29 is a NACA profile, e.g. NACA 0018.

The internal end profile 23 associated with the first internal end 201 of the intermediate portion 20 of each spoke is symmetric with respect to the vertical axis X defined by the intersection of a vertical plane passing through the rotation axis and through the center line of the chord C of the internal end profile 23.

Such internal end profile 23 is for example defined by mirroring, around the same X axis, the projection of the aerodynamic profile 22 on the end profile 23, thus defining the mirror-image profile 22a, and by tracing two segments, upper 35 and lower 36, tangent to the two aerodynamic profiles 22 and 22a.

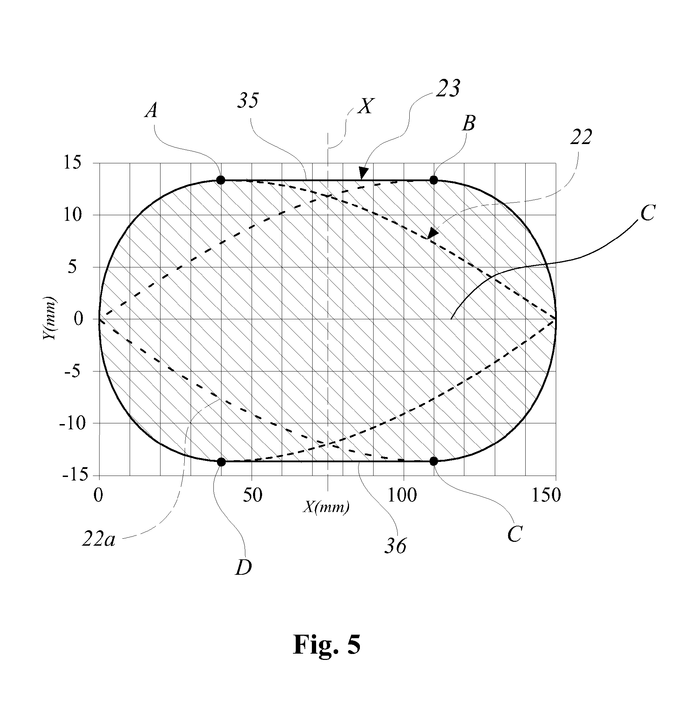

The points of tangency are shown with the letters A, B, C and D in figure 5.

The geometric transition from the external end profile 21 to the internal end profile 23 of the intermediate portion 20 is seamlessly obtained by means of extension through interpolation, e.g. of linear type, from the two end profiles 21 and 23, as shown in figure 4 with the lateral surface 24.

As mentioned above, each group of spokes 25 and 26 is a single body.

This confers a quick and easy mounting to the turbine 10 structure and a structural rigidity of fundamental importance for ensuring an optimal functioning of the blades.

It has been established that the finding attains in practice the preset task and objects.

In particular, with the finding, a turbine structure has been developed whose spokes are simple to mount and at the same time offer the least possible aerodynamic resistance, due to the aerodynamic portion and to the intermediate portion whose external surface progressively and continuously connects its aerodynamic end profiles: external and (symmetric) internal.

Unlike known turbines, whose blades are mounted independent from each other and often with fixing systems that are complex and taxing in terms of time and work force, with the groups of spokes in a single body the mounting operations are rather simplified and hence are more economical.

In addition, with the finding, a turbine structure has been developed whose spokes ensure optimal rigidity for the entire rotor.

Not least, with the finding, a vertical-axis wind or hydraulic turbine structure has been developed that is can be produced with known plants and technologies.

## Claims

1. Vertical-axis wind or hydraulic turbine structure (10), comprising:
- a shaft (11) susceptible to rotate around a vertical axis (Y) in a rotation direction (R);
- at least two blades (15, 16, 17) intended to be hit by a fluid, being extended from the bottom upward along rectilinear or curved trajectories, with vertical extension axis or with extension axis along a helical trajectory or the like;
- two or more spokes (12, 13, 14, 27, 28, 29), which are radially extended from said shaft (11), are symmetrically and angularly equidistant with respect to said rotation axis (Y), mechanically connect said blades (15, 16, 17) to said shaft (11) and are provided with a leading edge (A), susceptible to be the first to contact the fluid in the rotation direction (R) of said turbine, and a trailing edge (P), at which the fluid is susceptible to be recombined; **characterized in that** each spoke (12, 13, 14) comprises:
- an external portion (18), which is provided with an aerodynamic profile (22) and bears, externally fixed, one said blade (15, 16, 17);
- an internal portion (19) for fixing to said shaft (11), which obtains, in a single body with the internal portion (19) of the spokes (12, 13, 14, 27, 28, 29), a support body (30) with central hole (31) for fixing to said shaft (11), and is provided with a peripheral end (190) having a connection profile (191);
- an intermediate portion (20) for connecting between said external portion (18) and said internal portion (19), such intermediate portion (20) radially extended between:
- a first external end (200) provided with an external end profile (21) mechanically and continuously joined to the aerodynamic profile (22) of said external portion (18),
- a first internal end (201) provided with an internal end profile (23) mechanically and continuously joined to the connection profile (191) of said internal portion (19);
- the external end profile (21) associated with the first external end (200) of the intermediate portion (20) of each said spoke (12, 13, 14, 27, 28, 29) having the same aerodynamic profile (22) as said external portion (18) for a continuous connection with the aerodynamic profile (22) of said external portion (18) itself;
- the leading edge (A) of said intermediate portion (20) of each said spoke (12, 13, 14) having the same shape as the leading edge (A) of the aerodynamic profile (22) of said external portion (18), over the entire extension of said intermediate portion (20) from the external end profile (21) associated with the first external end (200) to the internal end profile (23) associated with the first internal end (201);
- the internal end profile (23) associated with the first internal end (201) of the intermediate portion (20) of each said spoke (12, 13, 14, 27, 28, 29) being provided with a leading edge (A) and with a trailing edge (P) that have equivalent shape, such shape equivalent to that of the leading edge (A) of said aerodynamic profile (22);
- the trailing edge (P) of said intermediate portion (20) being continuously extended from the shape of the trailing edge (P) of the external end profile (21) thereof, associated with the first external end (200) thereof and equivalent to the shape of the trailing edge (P) of said aerodynamic profile (22), to the trailing edge (P) of the internal end profile (23) thereof associated with the first internal end (201) thereof and equivalent to the shape of the leading edge (A) of said aerodynamic profile (22).

2. Wind turbine structure according to claim 1, **characterized in that** said central body connects, by means of said internal portions (19), the leading edges (A) and the trailing edges (P) of the internal end profiles (23) of said intermediate portions (20) by means of connecting arches (32, 33 and 34).

3. Wind turbine structure according to claim 2, **characterized in that** said connecting arches (32, 33 and 34) have the shape of the profile of the leading edge (A) with constant extension and equivalent to the shape of the aerodynamic profile (22) of the leading edge (A).

4. Wind turbine structure according to any one of the preceding claims, **characterized in that** the internal end profile (23) associated with the first internal end (201) of the intermediate portion (20) of each said spoke is symmetric with respect to the axis (X) defined by the intersection of a vertical plane passing through the rotation axis and through the center line of the chord (C) of said internal end profile (23).

5. Wind turbine structure according to claim 4, **characterized in that** said internal end profile (23) is defined by mirroring the projection of said aerodynamic profile (22) around said axis (X), a mirror-image profile (22a) being defined, and by tracing two upper (35) and lower (36) segments, tangent to the two aerodynamic profiles (22, 22a).

6. Wind turbine structure according to claim 1, **characterized in that** said spokes are in groups of three, a first group of spokes (25), comprising first upper spokes (12, 13, 14), and a second group of spokes (26), comprising second lower spokes (27, 28, 29).

7. Wind turbine structure according to the preceding claims, **characterized in that** said aerodynamic profile (22) of the aerodynamic external portion (18) is a NACA profile.
